(19) Europäisches Patentamt
European Patent Office
Office européen des brevets

(11) **EP 2 506 044 A1**

(12) **EUROPEAN PATENT APPLICATION**

(43) Date of publication:
**03.10.2012 Bulletin 2012/40**

(51) Int Cl.:
***G02B 6/036*** (2006.01)   ***G02B 6/028*** (2006.01)

(21) Application number: **11305344.1**

(22) Date of filing: **29.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Draka Comteq B.V.**
**1083 HJ Amsterdam (NL)**

(72) Inventors:
• **Molin, Denis**
**91210 Draveil (FR)**

• **Bigot-Astruc, Marianne**
**91460 Marcoussis (FR)**
• **Sillard, Pierre**
**78150 Le Chesnay (FR)**
• **Achten, Franciscus Johannes**
**5032 EM Tilburg (NL)**

(74) Representative: **op den Brouw-Sprakel, Vera Stefanie Irene**
**Algemeen Octrooi- en Merkenbureau**
**P.O. Box 645**
**5600 AP  Eindhoven (NL)**

(54) **Multimode optical fiber**

(57)   This multimode optical fiber comprises, from the center to the periphery, an inner core, an inner cladding, a depressed trench and an outer cladding, wherein the inner core has a radius $r_1$ comprised between 22 $\mu$m and 28 $\mu$m and a graded-index profile with a relative refractive index percent $\Delta = \dfrac{n_0^2 - n_{cl}^2}{2n_0^2} > 0.8\%$, where $n_0$ is the maximum index value of the inner core and $n_{c1}$ is the minimum index value of the inner core; the inner cladding has a radius $r_2$ and a refractive index difference $\Delta n_2$ with respect to the outer cladding; the depressed trench has a radius $r_3$ and a negative refractive index difference $\Delta n_3$ with respect to the outer cladding and surrounds the inner cladding, wherein $0.0115807 + 0.0127543 \times (r_2 - r_1) + 0.00241674 \times 1000\Delta n_3 - 0.00124086 \times (r_3 - r_2) \times 1000\Delta n_3 < 4\%$ and wherein $\int_{r_2}^{r_3} 1000\Delta n_3(r)dr$ is less

Fig. 1

**Description**

The present invention pertains to the field of optical fiber transmissions. It relates more particularly to a bend-insensitive multimode optical fiber having a reduced number of leaky modes.

An optical fiber conventionally consists of an optical core or inner core, for transmitting and possibly amplifying an optical signal, and of an optical cladding or outer cladding, for confining the optical signal within the inner core. To that end, the refractive index of the inner core $n_c$ is greater than the refractive index of the outer cladding $n_g$.

For optical fibers, the index profile is generally qualified in relation to the tracing of the graph which plots the function associating the refractive index with the fiber radius. Conventionally, the distance r to the center of the fiber is shown along the abscissa, and the difference between the refractive index at a given distance of the center of the fiber and the refractive index of the fiber outer cladding is shown along the ordinate axis. The index profile is therefore referred to as a "step", a "trapezoidal", a "triangular" or an "alpha" (also called graded-index) profile for graphs having the respective shapes of a step, a trapezoid, a triangle or a gradient. These curves are representative of the theoretical or set profile of the fiber, the manufacturing stresses of the fiber possibly leading to a slightly different profile.

There are mainly two types of optical fibers: multimode fibers ("MMFs") and monomode fibers. In an MMF, for a given wavelength, several optical modes propagate simultaneously along the fiber. In a monomode fiber, the fundamental mode is privileged and the higher order modes are significantly attenuated.

In step index fibers, the different modes propagate at different speeds along the fiber, which causes spreading of the light pulse which may become comparable to the bit time, and lead to an unacceptable error rate. To reduce intermodal dispersion in an MMF, it has been proposed to manufacture graded-index fibers with an "alpha" core profile. Such fiber has been used for many years and its characteristics have been described in particular in the publications: "Multimode theory of graded-core fibers" by D. Gloge et al., Bell System Technical Journal 1973, pp. 1563-1578, and "Comprehensive theory of dispersion in graded-index optical fibers" by G. Yabre, Journal of Lightwave Technology, February 2000, vol. 18, No. 2, pp. 166-177.

A typical graded-index profile can be defined as the relationship between the value n of the refractive index at one point and the distance r from this point to the center of the fiber:

$$n(r) = n_0 \sqrt{1 - 2\Delta \left(\frac{r}{a}\right)^{\alpha}}$$

where $\alpha \geq 1$ ($\alpha \to \infty$ corresponding to a step index), $n_0$ is the maximum index value of the multimode core (generally corresponding to the index value of the center of the inner core) and a is the radius of the multimode core and

$$\Delta = \frac{\left(n_0^2 - n_{cl}^2\right)}{2n_0^2}$$

where $n_{c1}$ is the minimum index value of the multimode core, generally corresponding to the index value at the boundary between the inner core and the inner cladding and also generally corresponding to the index value of the outer cladding (which is most often made of silica).

Typically, a = 25 $\mu$m for 50 $\mu$m MMFs and a = 31.25 $\mu$m for 62.5 MMFs. The parameter $\alpha$ is typically comprised between 1.9 and 2.2 and is optimized to provide the largest bandwidth at the target operating wavelength, typically 850 nm or 1300 nm.

The key parameters that ensure good performances of an MMF in multi-gigabit Ethernet communications are the resistance to bending (also called "bend resistance") and the bandwidth.

The bend resistance can easily be improved by surrounding the graded-index core by a depressed trench having a large volume. The depressed trench has a negative refractive index difference with respect to the outer cladding. The position and size of the depressed trench must be carefully designed to avoid degradation of the bandwidth.

However, while the depressed trench improves the bend resistance of the guided modes, it also allows additional modes, called "leaky modes", to co-propagate with the desired guided modes.

The leaky modes exhibit additional losses, called "leakage losses". As is well known by the skilled person, the bigger the depressed trench is, the lower the leakage losses are. On the other hand, the deeper the depressed trench is, i.e. the bigger the negative refractive index difference of the depressed trench with respect to the outer cladding is, the higher the number of leaky modes is.

The leaky modes are also present within a regular MMF, i.e. an MMF without any significant improvement in bend resistance, but they can be considered as not existing in practice, because the level of their leakage losses is extremely high.

On the other hand, with typical trench assistance, the leakage losses of the leaky modes are so reduced that the leaky modes can propagate over several meters and even more, depending on the trench design that is critical for compatibility with a regular MMF.

Thus, the problem is to design a trench-assisted graded-index multimode optical fiber with limited impact of the leaky modes on the optical characteristics (e.g. core size and numerical aperture) and still providing high bend resistance.

A number of documents, e.g. US-A-2009 0154888, US-A-2008 0166094, JP-A-2006 47719 and US-A-2010 0067858, deal with trench-assisted MMFs. However, none evocates the impact of leaky modes.

Document FR-A-2 949 870 addresses the issue of leaky modes. Nevertheless, document FR-A-2 949 870 focusses on the numerical aperture i.e. on the far field, rather than on the size of the inner core i.e. the near field in order to limit the contribution of the leaky modes. The invention addresses a different approach.

The present invention aims at remedying the gaps of the prior art.

More particularly, the present invention proposes adapting the dimensions and location of a depressed trench in the refractive index profile of the optical fiber, in order to prevent any deleterious effect of leaky modes inherent to the trench assistance concept, while keeping high resistance of the fiber to bending (so-called "bend insensitivity").

For that purpose, the invention provides a multimode optical fiber comprising, from the center to the periphery, an inner core, an inner cladding, a depressed trench and an outer cladding, wherein:

the inner core has a radius $r_1$ comprised between 22 $\mu$m and 28 $\mu$m and a graded-index profile with a relative refractive index percent

$$\Delta = \frac{n_0^2 - n_{cl}^2}{2n_0^2} > 0.8\%,$$

where $n_0$ is the maximum index value of the inner core and $n_{c1}$ is the minimum index value of the inner core,

the inner cladding has a radius $r_2$ and a refractive index difference $\Delta n_2$ with respect to the outer cladding,

the depressed trench has a radius $r_3$ and a negative refractive index difference $\Delta n_3$ with respect to the outer cladding and surrounds the inner cladding,

wherein $0.0115807 + 0.0127543 \times (r_2 - r_1) + 0.00241674 \times 1000\Delta n_3 - 0.00124086 \times (r_3 - r_2) \times 10004n_3 < 4\%$ and

wherein $\displaystyle\int_{r_2}^{r_3} 1000\Delta n_3(r)dr$ is less than -20 $\mu$m.

According to particular embodiments, the optical fiber of the invention may further have one or more of the following:

$$0.0115807 + 0.0127543 \times (r_2 - r_1) + 0.00241674 \times 1000\Delta n_3 - 0.00124086 \times (r_3 - r_2) \times 1000\Delta n_3 < 2\%;$$

$\displaystyle\int_{r_2}^{r_3} 1000\Delta n_3(r)dr$ greater than -30 $\mu$m;

macrobending losses lower than 0.3 dB/turn at a wavelength of 850 nm for a radius of curvature of 5 mm;

$\Delta n_3$ between $-15.10^{-3}$ and $-5.8.10^{-3}$;

$\Delta n_3$ between $-10.10^{-3}$ and $-5.8.10^{-3}$;

$r_2 - r_1$ between 0.8 $\mu$m and 7 $\mu$m;

$r_2 - r_1$ between 0.8 $\mu$m and 2 $\mu$m;

the refractive index difference $\Delta n_2$ between $-0.1 \times 10^{-3}$ and $+0.1 \times 10^{-3}$ and more preferably substantially equal to zero;

the variation in the measurement of the size of the inner core between a sample of 2 m of the fiber and a sample of 900 m of the fiber when all the guided and leaky modes are excited less than 1 $\mu$m.

For the same purpose, the invention also provides an optical system comprising at least a portion of a multimode optical fiber as succinctly described above.

Other characteristics and advantages of the invention will become apparent on reading the following description of particular embodiments of the invention given by way of non-limiting examples and with reference to the accompanying drawings, wherein:

- Figure 1 is a graph showing the refractive index profile of an optical fiber in accordance with the present invention, in a particular embodiment;
- Figure 2 is a graph showing a comparison between the relative difference between the size of the inner core of an optical fiber after 900 m and after 2 m computed according to a linear model in accordance with the invention and physical simulations; and
- Figure 3 illustrates the macrobending losses of some examples of 50 $\mu$m MMFs for 2 turns and for a radius of curvature of 5 mm, under specific launching conditions recommended by ITU-T Recommendation G651.1.

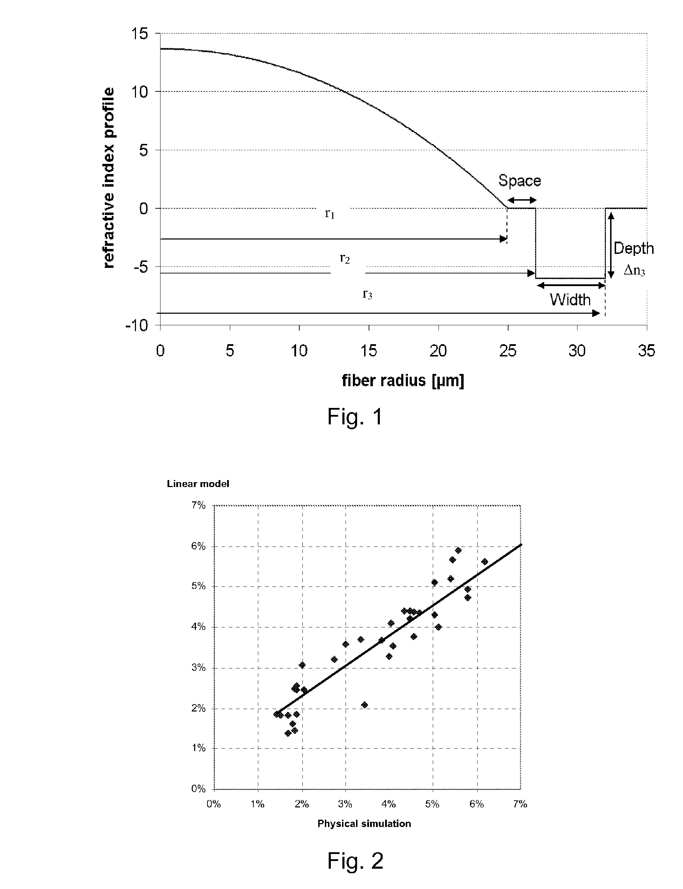

The present invention will be better understood with reference to **Figure 1,** which shows a refractive index profile of an optical fiber according to the present invention, in a particular embodiment.

The fiber according to the invention is a multimode optical fiber comprising, from the center to the periphery, an inner core, an inner cladding, a depressed trench and an outer cladding.

The inner core has a graded-index refractive index profile, the end of which is located at a radial distance $r_1$ comprised between 22 $\mu$m and 28 $\mu$m (also called "radius" of the inner core) from the center of the fiber. The inner core has a refractive index difference $\Delta n_1$ with respect to the outer cladding at the beginning of the alpha profile.

The expression "beginning of the alpha profile" means the location in the inner core where the refractive index profile has a maximum value $n_0$, typically at the center of the inner core. The inner core has a refractive index difference $\Delta u_{end}$ with respect to the outer cladding at the end of the alpha profile. The expression "end of the alpha profile" means the radial distance beyond which the profile is not "alpha" any more.

The inner core has a relative refractive index percent $\Delta$ defined as follows:

$$\Delta = \frac{n_0^2 - n_{cl}^2}{2n_0^2} > 0.8\%,$$

where $n_0$ is the maximum index value of the inner core and $n_{c1}$ is the minimum index value of the inner core. Typically, $n_{c1}$ is the refractive index of the undoped silica.

The inner cladding surrounds the inner core. In an embodiment, the inner cladding directly surrounds the inner core. The end of the inner cladding is located at a radial distance $r_2$ (also called "radius" of the inner cladding) from the center of the fiber. The inner cladding has a refractive index difference $\Delta n_2$ with respect to the outer cladding. $\Delta n_2$ is preferably comprised between $-0.1 \times 10^{-3}$ and $+0.1 \times 10^{-3}$ and more preferably substantially equal to 0, as in the preferred embodiment of Figure 1.

The depressed trench, the end of which is located at a radial distance $r_3$ (also called "radius" of the depressed trench) from the center of the fiber, surrounds the inner cladding. In an embodiment, the depressed trench directly surrounds the inner cladding. The depressed trench has a negative refractive index difference $\Delta n_3$ with respect to the outer cladding. In an embodiment, the outer cladding directly surrounds the depressed trench.

The difference $r_2 - r_1$, generally expressed in $\mu$m, is also called the "space" between the end of the inner core and the depressed trench, it is the same as the "width" of the inner cladding. The difference $r_3 - r_2$, also generally expressed in $\mu$m, is also called the "width" of the depressed trench. The value $1000 \times \Delta n_3$ is also called the "depth" of the depressed trench.

According to the present invention, the space between the end of the inner core and the depressed trench, the trench width and the trench depth satisfy the following condition, in order to limit the impact of the leaky modes:

$$0.0115807 + 0.0127543 \times (r_2 - r_1) + 0.00241674 \times 1000\Delta n_3 - 0.00124086 \times (r_3 - r_2) \times 1000\Delta n_3 < 4\%$$

where $r_2 - r_1$ and $r_3 - r_2$ are expressed in $\mu$m.

The member on the left of this condition, denoted "diff":

$$\text{diff} = 0.0115807 + 0.0127543 \times (r_2 - r_1) + 0.00241674 \times 1000\Delta n_3 - 0.00124086 \times (r_3 - r_2) \times 1000\Delta n_3$$

is obtained through linear regression of a collection of data resulting from the simulation of the core size after 2 m and after 900 m of 60 samples of 46 μm trench-assisted MMFs with refractive index profiles exhibiting various space, width and depth combinations as summarized in Table 2 below. In Table 2, the parameter "diff' is the relative difference between the core size at 900 m and at 2 m.

Table 2

| width (μm) | space (μm) | depth | diff |
|---|---|---|---|
| 1 | 0.5 | -3 | 1.8% |
| 2 | 0.5 | -3 | 1.7% |
| 2 | 0.5 | -5 | 1.5% |
| 2 | 0.5 | -7 | 1.4% |
| 2 | 0.5 | -9 | 1.4% |
| 4 | 0.5 | -3 | 1.9% |
| 4 | 0.5 | -5 | 2.0% |
| 4 | 0.5 | -7 | 3.0% |
| 4 | 0.5 | -9 | 4.0% |
| 7 | 0.5 | -3 | 3.8% |
| 7 | 0.5 | -5 | 5.8% |
| 7 | 0.5 | -7 | 6.8% |
| 7 | 0.5 | -9 | 7.6% |
| 1 | 1 | -3 | 3.4% |
| 1 | 1 | -5 | 1.9% |
| 1 | 1 | -7 | 1.8% |
| 1 | 1 | -9 | 1.7% |
| 2 | 1 | -3 | 2.0% |
| 2 | 1 | -5 | 1.9% |
| 2 | 1 | -7 | 1.8% |
| 2 | 1 | -9 | 1.8% |
| 4 | 1 | -3 | 2.7% |
| 4 | 1 | -5 | 3.3% |
| 4 | 1 | -7 | 4.5% |
| 4 | 1 | -9 | 5.8% |
| 7 | 1 | -3 | 5.0% |
| 7 | 1 | -5 | 7.6% |
| 7 | 1 | -7 | 9.3% |
| 7 | 1 | -9 | 10.0% |
| 1 | 2.5 | -3 | 5.1% |
| 1 | 2.5 | -5 | 4.6% |
| 1 | 2.5 | -7 | 4.1% |

(continued)

| width (μm) | space (μm) | depth | diff |
|---|---|---|---|
| 1 | 2.5 | -9 | 4.0% |
| 2 | 2.5 | -3 | 4.7% |
| 2 | 2.5 | -5 | 4.6% |
| 2 | 2.5 | -7 | 4.3% |
| 2 | 2.5 | -9 | 4.5% |
| 4 | 2.5 | -3 | 5.0% |
| 4 | 2.5 | -5 | 6.2% |
| 4 | 2.5 | -7 | 8.8% |
| 4 | 2.5 | -9 | 11.4% |
| 7 | 2.5 | -3 | 8.7% |
| 7 | 2.5 | -5 | 13.7% |
| 7 | 2.5 | -7 | 15.7% |
| 7 | 2.5 | -9 | 16.6% |
| 1 | 4 | -3 | 5.6% |
| 1 | 4 | -5 | 5.4% |
| 1 | 4 | -9 | 5.4% |
| 2 | 4 | -3 | 5.6% |
| 2 | 4 | -5 | 5.7% |
| 2 | 4 | -7 | 5.8% |
| 2 | 4 | -9 | 6.1% |
| 4 | 4 | -3 | 6.2% |
| 4 | 4 | -5 | 8.3% |
| 4 | 4 | -7 | 13.3% |
| 4 | 4 | -9 | 17.7% |
| 7 | 4 | -3 | 12.5% |
| 7 | 4 | -5 | 20.7% |
| 7 | 4 | -7 | 22.7% |
| 7 | 4 | -9 | 16.7% |

The graph of **Figure 2** illustrates the quality of the linear model of the above formula giving "diff'. Namely, Figure 2 shows a comparison between the relative difference between the core size at 900 m and at 2 m computed according to the linear model (see above formula giving "diff') and the physical simulations.

The above condition, namely, diff < 4%, means that the leaky modes do not significantly disturb the near field pattern observed at the output of a 2 m sample of an optical fiber under OFL (OverFilled Launch).

In an embodiment of the invention, the parameter "diff' defined as above is preferably lower than 4%, more preferably lower than 2%.

More specifically, the difference between the derived core size measurements performed with IEC 60793-1-20 Method C (which is well known to a person skilled in the art and consists in determining the cross-sectional diameter of the inner core of an optical fiber by analyzing the near field light distribution - also called near field pattern - on a cross-section at the end of the fiber under OFL and by calculating the core diameter with or without curve fitting), without curve fitting i.e. directly from the measured pattern at the k level, with k = 2.5% (where k is the threshold used for defining the core radius according to the standard procedure IEC 60793-1-20 Method C), for a 2 m fiber sample and for a 900 m fiber sample, is close to 2%.

In addition, the variation in the measurement of the size of the inner core between a sample of 2 m of the fiber and a sample of 900 m of the fiber when all the guided and leaky modes are excited is less than 1 $\mu$m.

In order to improve bend resistance, in a preferred embodiment, the depressed trench is designed with ($r_3$ - $r_2$) $\times$ 1000$\Delta n_3$ less than -20 $\mu$m (i.e. widthxdepth less than -20 $\mu$m).

More generally, $\int_{r_2}^{r_3} 1000\Delta n_3(r)dr$ is less than -20 $\mu$m. Preferably, $\int_{r_2}^{r_3} 1000\Delta n_3(r)dr$ is greater than -30 $\mu$m.

The space between the end of the inner core and the depressed trench is chosen to be preferably large enough to allow tuning of the bandwidth with the refractive index of the inner cladding between the inner core and the depressed trench. For instance, the "space" $r_2$ - $r_1$ is greater than 0.8 $\mu$m and is preferably comprised between 0.8 $\mu$m and 7 $\mu$m, more preferably between 0.8 $\mu$m and 2 $\mu$m.

According to a preferred embodiment of the invention, the depressed trench depth $\Delta n_3$ is comprised between $-15 \times 10^{-3}$ and $-5.8.10^{-3}$, more preferably between $-10 \times 10^{-3}$ and $-5.8.10^{-3}$.

Table 1 below gives examples of fibers in accordance with the present invention. The parameter "diff" is the member on the left of the condition defined above:

$$\text{diff} = 0.0115807 + 0.0127543 \times (r_2 - r_1) + 0.00241674 \times 1000\Delta n_3 - 0.00124086 \times (r_3 - r_2) \times 1000\Delta n_3$$

Table 1

| width ($\mu$m) | space ($\mu$m) | depth | diff | widthxdepth ($\mu$m) |
|---|---|---|---|---|
| 3.4 | 1 | -5.88235 | 3.5% | -20 |
| 3.7 | 1 | -6.75676 | 3.9% | -25 |
| 3.2 | 1 | -9.375 | 3.9% | -30 |
| 2.9 | 1 | -12.069 | 3.9% | -35 |

The macrobending losses depend mainly on the product depthxwidth. Table 3 below gives some examples of 50 $\mu$m MMFs with different values of that product. Macrobending losses are measured at 850 nm according to ITU-T Recommendation G651.1 under specific launching conditions defined in the standard IEC 60793-1-47. "BL 2turns @ 5mm" denotes the macrobending losses for two turns and for a radius of curvature of 5 mm.

Table 3

| width ($\mu$m) | space ($\mu$m) | depth | width depth ($\mu$m) | BL 2turns @ 5mm (dB) | diff |
|---|---|---|---|---|---|
| 6.3 | 1.3 | -6.6 | -41.6 | 0.100 | 6.4% |
| 6.3 | 1.3 | -0.6 | -3.8 | 2.000 | 3.1% |
| 4.0 | 1.0 | -3.5 | -14.0 | 0.627 | 3.3% |
| 4.2 | 1.0 | -9.5 | -39.5 | 0.089 | 5.1% |
| 4.0 | 1.0 | -12.9 | -52.0 | 0.021 | 5.8% |
| **3.6** | **1.0** | **-6.2** | **-22.2** | **0.272** | **3.7%** |
| 4.0 | 1.0 | -12.9 | -51.8 | 0.015 | 5.7% |
| 4.0 | 1.0 | -7.6 | -30.3 | 0.132 | 4.4% |

In Table 3, only the example in bold is in accordance with the invention. The other examples show that the condition diff < 4% may be fulfilled by other fibers, but with high bending losses, and that the macrobending losses may be improved but with a deleterious impact on the core size.

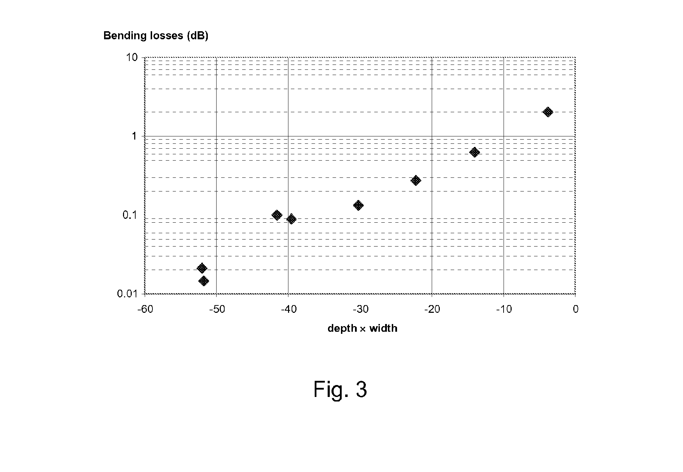

The graph of **Figure 3** illustrates the examples of Table 3. It shows the macrobending losses (in dB) of the

examples of 50 $\mu$m MMFs reported in Table 3 for 2 turns and for a radius of curvature of 5 mm, under the launching conditions recommended by ITU-T G651.1. It can be seen that, according to a preferred embodiment of the invention, the fiber exhibits macrobending losses lower than 0.3 dB/turn at a wavelength of 850 nm for a radius of curvature of 5 mm. Therefore, the fiber according to the present invention offers high resistance to bendings, in addition to its reduced number of leaky modes.

The invention also provides an optical system comprising at least a portion of a multimode optical fiber as described above.

It should be noted that the dispersion mode delay (DMD) can be improved in order to meet the requirements of standards OM3 and OM4, which are as follows:

Table 4

DMD SPECIFICATIONS FOR OM3 FIBERS

| Specifications | Inner DMD | Outer DMD | Sliding DMD |
|---|---|---|---|
| 1 | ≤0.33 | ≤0.33 | ≤0.25 |
| 2 | ≤0.27 | ≤0.35 | ≤0.25 |
| 3 | ≤0.26 ≤0.40 | | ≤0.25 |
| 4 | ≤0.25 | ≤0.50 | ≤0.25 |
| 5 | ≤0.24 | ≤0.60 | ≤0.25 |
| 6 | ≤0.23 | ≤0.70 | ≤0.25 |

OM3 fibers fulfill at least one of these six specifications. Outer, inner and sliding DMD values are expressed in ps/m.

Table 5

DMD SPECIFICATIONS FOR OM4 FIBERS

| Specifications | Inner DMD | Outer DMD | Sliding DMD |
|---|---|---|---|
| 1 | ≤0.10 | ≤0.30 | ≤0.11 |
| 2 | ≤0.11 | ≤0.17 | ≤0.11 |
| 3 | ≤0.14 | ≤0.14 | ≤0.11 |

OM4 fibers fulfill at least one of these three specifications. Outer, inner and sliding DMD values are expressed in ps/m.

The standards define three DMD values with their respective masks named inner, outer and sliding with their respective masks. The inner mask extends from 5 $\mu$m up to 18 $\mu$m, and the outer mask from 0 $\mu$m to 23 $\mu$m. The sliding masks are 5 $\mu$m-width masks that successively start at 7, 9, 11 and 13 $\mu$m offsets.

The DMD values correspond to the delay between the fastest and the slowest pulses within a given sub-group of offset launches, also called masks, based on the rise and fall time at quarter maximum and taking into account the FWQM of the reference input pulse.

They are computed from the DMD plot obtained from the DMD measurements that consist in measuring pulse responses of the fiber for single-mode launches that radially scan the fiber core.

By choosing appropriate values of $r_2 - r_1$, $\Delta n_2$ and $\Delta n_3$, the DMD can be optimized.

Moreover, since macrobending losses are reduced, the DMD values are likely to be unchanged under bends.

**Claims**

1. A multimode optical fiber comprising, from the center to the periphery, an inner core, an inner cladding, a depressed trench and an outer cladding, wherein:

   the inner core has a radius $r_1$ comprised between 22 $\mu$m and 28 $\mu$m and a graded-index profile with a relative

refractive index percent $\Delta = \dfrac{n_0^2 - n_{cl}^2}{2n_0^2}$ > 0.8%, where $n_0$ is the maximum index value of the inner core and $n_{c1}$ is the minimum index value of the inner core,

the inner cladding has a radius $r_2$ and a refractive index difference $\Delta n_2$ with respect to the outer cladding, the depressed trench has a radius $r_3$ and a negative refractive index difference $\Delta n_3$ with respect to the outer cladding and surrounds the inner cladding,

wherein $0.0115807 + 0.0127543 \times (r_2 - r_1) + 0.00241674 \times 1000\Delta n_3 - 0.00124086 \times (r_3 - r_2) \times 1000\Delta n_3 < 4\%$ and

wherein $\displaystyle\int_{r_2}^{r_3} 1000\Delta n_3(r)dr$ is less than -20 $\mu$m.

2. An optical fiber according to claim 1, wherein $0.0115807 + 0.0127543 \times (r_2 - r_1) + 0.00241674 \times 1000\Delta n_3 - 0.00124086 \times (r_3 - r_2) \times 1000\Delta n_3 < 2\%$.

3. An optical fiber according to claim 1 or 2, wherein $\displaystyle\int_{r_2}^{r_3} 1000\Delta n_3(r)dr$ is greater than -30 $\mu$m.

4. An optical fiber according to claim 1, 2 or 3, having macrobending losses lower than 0.3 dB/turn at a wavelength of 850 nm for a radius of curvature of 5 mm.

5. An optical fiber according to any of the preceding claims, wherein $\Delta n_3$ is comprised between $-15.10^{-3}$ and $-5.8.10^{-3}$.

6. An optical fiber according to claim 5, wherein $\Delta n_3$ is comprised between $-10.10^{-3}$ and $-5.8.10^{-3}$.

7. An optical fiber according to any of the preceding claims, wherein $r_2 - r_1$ is comprised between 0.8 $\mu$m and 7 $\mu$m.

8. An optical fiber according to claim 7, wherein $r_2 - r_1$ is comprised between 0.8 $\mu$m and 2 $\mu$m.

9. An optical fiber according to any of the preceding claims, wherein the refractive index difference $\Delta n_2$ is comprised between $-0.1 \times 10^{-3}$ and $+0.1 \times 10^{-3}$ and is more preferably substantially equal to zero.

10. An optical fiber according to any of the preceding claims, wherein the variation in the measurement of the size of the inner core between a sample of 2 m of the fiber and a sample of 900 m of the fiber when all the guided and leaky modes are excited is less than 1 $\mu$m.

11. An optical system comprising at least a portion of a multimode optical fiber according to any of the preceding claims.

Fig. 1

Fig. 2

Bending losses (dB)

Fig. 3

**EP 2 506 044 A1**

Europäisches Patentamt
European Patent Office
Office européen des brevets

# EUROPEAN SEARCH REPORT

Application Number

EP 11 30 5344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/169163 A1 (ABBOTT III JOHN STEELE [US] ET AL) 2 July 2009 (2009-07-02) * figures 1-2; examples 6,9; tables 2-3 * | 1-5,7-11 | INV. G02B6/036 G02B6/028 |
| E | EP 2 339 384 A1 (DRAKA COMTEQ BV [NL]) 29 June 2011 (2011-06-29) * figure 2; example 2; table 1 * | 1,3-8, 10,11 | |
| X | US 2009/154888 A1 (ABBOTT III JOHN STEELE [US] ET AL) 18 June 2009 (2009-06-18) * figures 1-2; examples 9-10; table 3 * | 1,3,4, 7-11 | |
| A | EP 2 299 302 A1 (DRAKA COMTEQ BV [NL]) 23 March 2011 (2011-03-23) * paragraphs [0052], [0055]; claims 3-5; figures * | 1-11 | |
| A | US 7 865 050 B1 (SUN YI [US]) 4 January 2011 (2011-01-04) * the whole document * | 1-11 | |
| A | EP 0 131 729 A1 (SUMITOMO ELECTRIC INDUSTRIES [JP]) 23 January 1985 (1985-01-23) * the whole document * | 1-11 | TECHNICAL FIELDS SEARCHED (IPC) G02B |

The present search report has been drawn up for all claims

| Place of search | Date of completion of the search | Examiner |
|---|---|---|
| Munich | 3 August 2011 | Riblet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 30 5344

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2011

| Patent document cited in search report | | Publication date | Patent family member(s) | | Publication date |
|---|---|---|---|---|---|
| US 2009169163 | A1 | 02-07-2009 | NONE | | |
| EP 2339384 | A1 | 29-06-2011 | CN | 102087379 A | 08-06-2011 |
| | | | FR | 2953606 A1 | 10-06-2011 |
| | | | JP | 2011118392 A | 16-06-2011 |
| | | | US | 2011135263 A1 | 09-06-2011 |
| US 2009154888 | A1 | 18-06-2009 | NONE | | |
| EP 2299302 | A1 | 23-03-2011 | CN | 102023333 A | 20-04-2011 |
| | | | FR | 2949870 A1 | 11-03-2011 |
| | | | JP | 2011059687 A | 24-03-2011 |
| | | | US | 2011058781 A1 | 10-03-2011 |
| US 7865050 | B1 | 04-01-2011 | NONE | | |
| EP 0131729 | A1 | 23-01-1985 | AU | 561707 B2 | 14-05-1987 |
| | | | AU | 2687484 A | 20-12-1984 |
| | | | CA | 1251965 A1 | 04-04-1989 |
| | | | DE | 3470961 D1 | 09-06-1988 |
| | | | DK | 195084 A | 16-12-1984 |
| | | | JP | 59232302 A | 27-12-1984 |
| | | | US | 4715695 A | 29-12-1987 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090154888 A
- US 20080166094 A
- JP 2006047719 A

- US 20100067858 A
- FR 2949870 A

**Non-patent literature cited in the description**

- **D. GLOGE et al.** Multimode theory of graded-core fibers. *Bell System Technical Journal,* 1973, 1563-1578

- **G. YABRE.** Comprehensive theory of dispersion in graded-index optical fibers. *Journal of Lightwave Technology,* February 2000, vol. 18 (2), 166-177